# DEMANDE DE BREVET EUROPEEN

(11) **EP 3 656 599 A1**
(43) Date de publication de la demande: **27.05.2020**
(21) Numéro de dépôt: 20152097.0
(22) Date de dépôt: 18.07.2016
(51) Int. Cl.: B60L 1/02, B60L 3/04, H03K 17/10, H05B 3/00, H03F 3/217

(54) **PROCÉDÉ DE SÉCURISATION DU FONCTIONNEMENT D'UN DISPOSITIF CHAUFFANT**

(30) Priorité: 22.07.2015 FR 1556925
(62) Demande divisionnaire de: 16179866.5
(71) Demandeur: Valeo Systemes Thermiques, 78320 Le Mesnil Saint Denis (FR)
(72) Inventeur: RAULIN-GESTAS, Laetitia, 78322 LE MESNIL SAINT-DENIS CEDEX (FR); PUZENAT, Bertrand, 78322 LE MESNIL SAINT-DENIS CEDEX (FR)
(74) Mandataire: Tran, Chi-Hai

(57) **Abrégé**

L'invention concerne un procédé de sécurisation du fonctionnement d'un dispositif chauffant comprenant un élément chauffant (1) disposé dans un circuit électrique comprenant un organe d'alimentation (4) et au moins un interrupteur (6.1, 6.2) commandé par au moins une unité centrale (7) entre un état ouvert et un état fermé en fonction d'un écart de température entre une température ambiante et une température de consigne. Selon l'invention, le procédé comporte les étapes de commander de façon cyclique une ouverture de l'interrupteur commandé indépendamment de l'écart entre la température ambiante et la température de consigne, et de vérifier que le circuit électrique est effectivement interrompu.

Application notamment au domaine automobile.

## Description

L'invention concerne un procédé de sécurisation du fonctionnement d'un dispositif chauffant, notamment bien que non exclusivement, un dispositif de chauffage d'un véhicule automobile.

### ARRIÈRE-PLAN DE L'INVENTION

On connait des dispositifs de chauffage de véhicules automobiles comprenant un élément chauffant monté dans circuit électrique comprenant un organe d'alimentation et généralement plusieurs interrupteurs commandés par une unité centrale entre un état ouvert et un état fermé en fonction d'un écart de température entre une température ambiante et une température de consigne.

Contrairement aux véhicules à moteur thermique, les moteurs des véhicules électriques ne dégagent pas une chaleur suffisante pour assurer un chauffage de l'habitacle du véhicule. Le chauffage d'un véhicule électrique est donc assuré par des résistances chauffantes reliées à un organe d'alimentation par l'intermédiaire de transistors commandés par une unité centrale. Pour assurer un confort des utilisateurs du véhicule, il est nécessaire que le chauffage ait une puissance importante, typiquement de l'ordre de 5 kW. Dans ces conditions les transistors commandés sont soumis à des contraintes thermiques importantes et il existe donc un risque de mise en court-circuit des transistors, ce qui entraîne un fonctionnement à pleine puissance du dispositif de chauffage avec un risque de déclenchement d'un incendie du véhicule.

Pour éviter le déclenchement d'un incendie, il est connu de réaliser des circuits de chauffage comprenant plusieurs transistors commandés en série, typiquement deux transistors en série, et de réaliser les résistances chauffantes avec un matériau ayant un coefficient de température positif.

L'utilisation d'éléments à coefficient de température positif est satisfaisante du point de vue de sécurité en raison de la limitation de la chaleur générée. Toutefois, cette limitation de la chaleur générée entraîne un allongement du temps nécessaire pour amener l'habitacle à une température de confort.

### OBJET DE L'INVENTION

Un but de l'invention est de proposer un procédé de sécurisation permettant d'utiliser un élément chauffant générant une puissance importante tout en préservant la sécurité du véhicule.

### BRÈVE DESCRIPTION DE L'INVENTION

En vue de la réalisation de ce but, on propose selon l'invention un procédé de sécurisation du fonctionnement d'un dispositif chauffant comprenant un élément chauffant disposé dans un circuit électrique comprenant un organe d'alimentation et au moins un interrupteur commandé par au moins une unité centrale entre un état ouvert et un état fermé en fonction d'un écart de température entre une température ambiante et une température de consigne. Selon l'invention, le procédé comporte les étapes de commander de façon cyclique une ouverture de l'interrupteur commandé indépendamment de l'écart entre la température ambiante et la température de consigne, et de vérifier que le circuit électrique est effectivement interrompu.

Ainsi dans le cas où un court-circuit survient, la vérification du circuit révèle la défaillance et le dispositif de chauffage est immédiatement mis hors service, soit manuellement, soit automatiquement.

Selon une version avantageuse de l'invention, en relation avec un circuit électrique comportant plusieurs interrupteurs commandés montés en série, le procédé comporte les étapes de commander alternativement une ouverture d'un premier interrupteur commandé, et d'un second interrupteur commandé indépendamment de l'écart entre la température ambiante et la température de consigne, et de vérifier que le circuit électrique est effectivement interrompu pour chacune des ouvertures d'un interrupteur.

On peut ainsi identifier de façon précise l'interrupteur défaillant.

Selon un aspect avantageux de cette version de l'invention, le procédé comporte les étapes préalables de commander l'ouverture simultanée de tous les interrupteurs commandés, et de vérifier que le circuit électrique est effectivement interrompu. Si le résultat de ce test est positif, cela signifie qu'au moins un des deux transistors est défaillant et il est possible d'interrompre le cycle de vérification, ce qui minimise l'interruption du cycle de chauffage.

Selon encore une autre version de l'invention, en relation avec un circuit électrique comportant plusieurs interrupteurs commandés montés en série, le procédé comporte les étapes de commander l'ouverture simultanée de tous les interrupteurs commandés, et de vérifier que le circuit électrique est effectivement interrompu. Si le résultat de ce test est positif, cela signifie qu'au moins un des deux transistors est défaillant. Cette vérification permet notamment de minimiser le temps d'interruption du cycle normal de chauffage tout en donnant une information utile sur le risque global de surchauffe.

Selon un mode de mise en œuvre préféré de l'invention, la vérification que le circuit électrique est effectivement interrompu, est réalisée en comparant une tension en un point du circuit avec une tension de référence pour ce même point du circuit.

Selon encore un aspect de l'invention, le procédé comporte en outre les étapes de commander de façon cyclique une fermeture de l'interrupteur commandé indépendamment de l'écart entre la température ambiante et la température de consigne, et de vérifier que le circuit électrique est effectivement fermé. En relation avec un circuit électrique comportant plusieurs interrupteurs commandés montés en série, le procédé comporte en outre les étapes de commander de façon cyclique une fermeture de l'ensemble des interrupteurs commandés en série indépendamment de l'écart entre la température ambiante et la température de consigne, et de vérifier que le circuit électrique est effectivement fermé. On s'assure ainsi que le dispositif est en ordre de marche.

Selon encore un autre aspect de l'invention, en relation avec un organe d'alimentation fonctionnant en modulation de largeur d'impulsion, le procédé de sécurisation est mis en œuvre pendant une durée inférieure à une période de la modulation de largeur d'impulsion, de préférence pendant une durée inférieure à un cinquième de la période de la modulation de largeur d'impulsion.

Selon encore un autre aspect de l'invention, en relation avec un organe d'alimentation fonctionnant en modulation de largeur d'impulsion, le procédé de sécurisation est mis en œuvre pendant une durée supérieure ou égale à une période de la modulation de largeur d'impulsion.

De préférence, encore le procédé de sécurisation est mis en œuvre à une fréquence inférieure à une fréquence de la modulation de largeur d'impulsion.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- La figure 1 est une représentation schématique d'un dispositif dans lequel l'invention est mise en œuvre,
- la figure 2 est une représentation schématique d'une variante de réalisation de l'élément chauffant auquel s'applique le procédé de l'invention,
- la figure 3 est une représentation schématique d'une autre variante de réalisation de l'élément chauffant auquel s'applique le procédé de l'invention.

### DESCRIPTION DETAILLÉE DE L'INVENTION

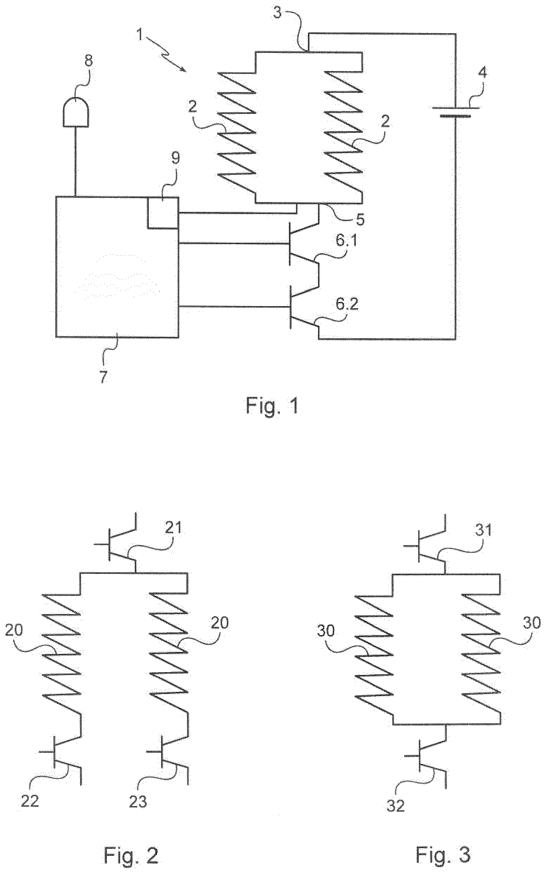

En référence à la figure 1, le dispositif chauffant auquel l'invention s'applique comprend de façon connue en soi un élément chauffant 1, qui dans le mode de réalisation illustré comporte deux résistances 2 montées en parallèle. Un des points de jonction 3 de l'élément chauffant est relié directement à un organe d'alimentation 4 tandis que l'autre point de jonction 5 est relié à l'organe d'alimentation 4 par l'intermédiaire de deux transistors, portant la référence globale 6 et les références particulières 6.1 et 6.2, montés en série et reliés à une unité centrale 7 pour réaliser des interrupteurs commandés entre les éléments chauffants et l'organe d'alimentation 4. Un capteur de température 8 est également relié à l'unité centrale 7 pour permettre la mise en œuvre du procédé habituel de régulation de chauffage par comparaison entre la température ambiante et une température de référence réglée par l'utilisateur.

Pour la mise en œuvre du procédé selon l'invention, l'unité centrale 7 contient un organe de mesure 9 d'une tension électrique qui est relié au point de jonction 5.

De façon également connue en soi le dispositif chauffant est mis en œuvre en découpant le courant dans l'élément chauffant selon une modulation de largeur d'impulsion c'est-à-dire avec un temps de conduction et un temps de non conduction, la période de la modulation de largeur d'impulsion étant égale à la somme du temps de conduction et du temps de non conduction. À titre d'exemple l'invention a été mise en œuvre en relation avec un découpage en modulation de largeur d'impulsion ayant une période de 500 ms, le pas (1/100) étant de 5 ms ce qui permet d'avoir un cycle de fonctionnement à 100 % sur une période de 500 ms.

Le procédé de vérification selon l'invention est mis en œuvre de façon cyclique indépendamment du cycle de fonctionnement du dispositif de chauffage, c'est-à-dire quel que soit l'écart entre la température ambiante et la température de consigne.

Dans son mode de mise en œuvre préféré, le procédé selon l'invention comprend quatre séquences de tests :
- Test 1 : ouverture de l'interrupteur 6.1 et de l'interrupteur 6.2 et mesure de la tension à la jonction 5. Si la tension est égale, aux erreurs de mesure près, à la tension nominale de l'organe d'alimentation 4, il est donc possible de passer directement au quatrième test,
- Test 2 : fermeture de l'interrupteur 6.1 et ouverture de l'interrupteur 6.2. Si la tension de la jonction 5 n'est pas égale à la tension nominale de l'organe d'alimentation, cela signifie que l'interrupteur 6.2 est en court-circuit.
- Test 3 : ouverture de l'interrupteur 6.1 et fermeture de l'interrupteur 6.2, et mesure de la tension au point de jonction 5. Si la tension n'est pas égale à la tension nominale de l'organe d'alimentation, ceci signifie que interrupteur 6.1 est en court-circuit.
- Test 4 : fermeture de l'interrupteur 6.1 et de l'interrupteur 6.2, et mesure de la tension au point de jonction 5. Si la tension est supérieure à zéro, aux tolérances de mesure près, ceci signifie que le circuit est défaillant par rupture en un point quelconque du circuit.

Si un seul interrupteur est en court-circuit, on peut prévoir une alarme de premier niveau invitant l'utilisateur à faire vérifier d'urgence le dispositif de chauffage. Si les eux interrupteurs commandés sont en court-circuit, on peut prévoir une mise hors service automatique du dispositif de chauffage, ou une alarme de second niveau enjoignant l'utilisateur d'interrompre le chauffage et/ou de se rendre au plus vite dans un garage.

Compte tenu de la puissance des éléments chauffants, il est nécessaire d'effectuer une vérification selon une périodicité aussi élevée que possible tout en minimisant la perturbation engendrée par les tests sur le fonctionnement normal du dispositif de chauffage. À titre d'exemple un fonctionnement en court-circuit pendant une période de 10 minutes engendre un risque important de début d'incendie dans le véhicule. Dans l'exemple de découpage en modulation de largeur d'impulsion décrit ci-dessus, le procédé de vérification a été mis en œuvre de façon cyclique toutes les 60 secondes et la durée de la vérification a été inférieure à 100 ms (c'est-à-dire inférieur à 1/5 de la période de modulation de largeur d'impulsion).

La figure 2 et la figure 3 illustrent des variantes de dispositif chauffant auxquelles le procédé de sécurisation selon l'invention peut être appliqué. Dans le cas de la figure 2 les résistances chauffantes 20 sont reliées en amont à un interrupteur unique 21 et en aval à deux interrupteurs 22 et 23, selon un montage en pseudo-parallèle.

Dans le cas de la figure 3, les résistances chauffantes 30 sont montées en parallèle et sont reliées en amont à un interrupteur unique 31 et en aval à un interrupteur unique 32.

Une variante de réalisation non illustrée propose un procédé de sécurisation pour un circuit électrique comportant au moins deux interrupteurs commandés chacun par une unité centrale entre un état ouvert et un état fermé en fonction d'un écart de température entre une température ambiante et une température de consigne caractérisé en ce qu'il comporte les étapes de commander de façon cyclique une ouverture de l'interrupteur commandé indépendamment de l'écart entre la température ambiante et la température de consigne, et de vérifier que le circuit électrique est effectivement interrompu. En outre, dans un tel mode de réalisation, des capteurs de température sont également respectivement reliés à chaque unité centrale pour permettre la mise en œuvre du procédé.

Ici, les étapes de commande de façon cyclique et de façon synchrone entre les interrupteurs ainsi que les étapes de vérifications sont maîtrisées par une des uité centrale dite maître grâce à un séquenceur interne logiciel.

Bien entendu ces variantes ne sont pas limitatives et l'invention est susceptible de variantes de réalisations qui apparaîtront à l'homme de métier sans sortir du cadre de l'invention telle que définie par les revendications.

En particulier, le procédé de vérification selon l'invention permet de détecter de façon quasi immédiate la mise en court-circuit de l'un des interrupteurs.

## Revendications

**1.** Procédé de sécurisation du fonctionnement d'un dispositif chauffant comprenant un élément chauffant (1) disposé dans un circuit électrique comprenant un organe d'alimentation (4) et au moins un interrupteur (6.1, 6.2) commandé par au moins une unité centrale (7) entre un état ouvert et un état fermé en fonction d'un écart de température entre une température ambiante et une température de consigne **caractérisé en ce qu'**il comporte les étapes de commander de façon cyclique une ouverture de l'interrupteur commandé indépendamment de l'écart entre la température ambiante et la température de consigne, et de vérifier que le circuit électrique est effectivement interrompu.

**2.** Procédé selon la revendication 1, en relation avec un circuit électrique comportant plusieurs interrupteurs commandés (6.1, 6.2) montés en série, **caractérisé en ce qu'**il comporte les étapes de commander alternativement une ouverture d'un premier interrupteur commandé (6.1), et d'un second interrupteur commandé (6.2) indépendamment de l'écart entre la température ambiante et la température de consigne, et de vérifier que le circuit électrique est effectivement interrompu pour chacune des ouvertures d'un interrupteur.

**3.** Procédé selon la revendication 2, **caractérisé en ce qu'**il comporte en outre les étapes préalables de commander l'ouverture simultanée de tous les interrupteurs commandés, et de vérifier que le circuit électrique est effectivement interrompu.

**4.** Procédé selon la revendication 1, en relation avec un circuit électrique comportant plusieurs interrupteurs commandés montés en série, **caractérisé en ce qu'**il comporte les étapes de commander l'ouverture simultanée de tous les interrupteurs commandés, et de vérifier que le circuit électrique est effectivement interrompu.

**5.** Procédé selon la revendication 1, **caractérisé en ce que** la vérification que le circuit électrique est effectivement interrompu, est réalisée en comparant une tension en un point du circuit avec une tension de référence pour ce même point du circuit.

**6.** Procédé selon la revendication 1, **caractérisé en ce qu'**il comporte en outre les étapes de commander de façon cyclique une fermeture de l'interrupteur commandé indépendamment de l'écart entre la température ambiante et la température de consigne, et de vérifier que le circuit électrique est effectivement fermé.

**7.** Procédé selon la revendication 2, **caractérisé en ce qu'**il comporte en outre les étapes de commander de façon cyclique une fermeture de l'ensemble des interrupteurs commandés en série indépendamment de l'écart entre la température ambiante et la température de consigne, et de vérifier que le circuit électrique est effectivement fermé.

**8.** Procédé selon la revendication 1, en relation avec un organe d'alimentation fonctionnant en modulation de largeur d'impulsion, **caractérisé en ce que** le procédé de sécurisation est mis en œuvre pendant une durée inférieure à une période de la modulation de largeur d'impulsion.

**9.** Procédé selon la revendication 1, caractérisé en que le procédé de sécurisation est mis en œuvre pendant une durée indépendante d'une modulation de largeur d'impulsion.

**10.** Procédé selon la revendication 8, caractérisé en que le procédé de sécurisation est mis en œuvre à une fréquence inférieure à une fréquence de la modulation de largeur d'impulsion.

**11.** Procédé selon la revendication 8, caractérisé en que le procédé de sécurisation est mis en œuvre à une fréquence indépendante à une fréquence de la modulation de largeur d'impulsion.

**1.** Procédé de sécurisation du fonctionnement d'un dispositif chauffant comprenant un élément chauffant (1) disposé dans un circuit électrique comprenant un organe d'alimentation (4) et au moins un interrupteur (6.1, 6.2) commandé par au moins une unité centrale (7) entre un état ouvert et un état fermé en fonction d'un écart de température entre une température ambiante et une température de consigne **caractérisé en ce qu'**il comporte les étapes de commander de façon cyclique une ouverture de l'interrupteur commandé indépendamment de l'écart entre la température ambiante et la température de consigne, et de vérifier que le circuit électrique est effectivement interrompu.

**2.** Procédé selon la revendication 1, en relation avec un circuit électrique comportant plusieurs interrupteurs commandés (6.1, 6.2) montés en série, **caractérisé en ce qu'**il comporte les étapes de commander alternativement une ouverture d'un premier interrupteur commandé (6.1), et d'un second interrupteur commandé (6.2) indépendamment de l'écart entre la température ambiante et la température de consigne, et de vérifier que le circuit électrique est effectivement interrompu pour chacune des ouvertures d'un interrupteur.

**3.** Procédé selon la revendication 2, **caractérisé en ce qu'**il comporte en outre les étapes préalables de commander l'ouverture simultanée de tous les interrupteurs commandés, et de vérifier que le circuit électrique est effectivement interrompu.

**4.** Procédé selon la revendication 1, en relation avec un circuit électrique comportant plusieurs interrupteurs commandés montés en série, **caractérisé en ce qu'**il comporte les étapes de commander l'ouverture simultanée de tous les interrupteurs commandés, et de vérifier que le circuit électrique est effectivement interrompu.

**5.** Procédé selon l'une quelconque des revendications précédentes, **caractérisé en ce que** la vérification que le circuit électrique est effectivement interrompu, est réalisée en comparant une tension en un point du circuit avec une tension de référence pour ce même point du circuit.

**6.** Procédé selon l'une quelconque des revendications précédentes, **caractérisé en ce qu'**il comporte en outre les étapes de commander de façon cyclique une fermeture de l'interrupteur commandé indépendamment de l'écart entre la température ambiante et la température de consigne, et de vérifier que le circuit électrique est effectivement fermé.

**7.** Procédé selon l'une quelconque des revendications précédentes, en relation avec un organe d'alimentation fonctionnant en modulation de largeur d'impulsion, **caractérisé en ce que** le procédé de sécurisation est mis en œuvre pendant une durée inférieure à une période de la modulation de largeur d'impulsion.

**8.** Procédé selon l'une quelconque des revendications 1 à 6, caractérisé en que le procédé de sécurisation est mis en œuvre pendant une durée indépendante d'une modulation de largeur d'impulsion.

**10.** Procédé selon la revendication 7, caractérisé en que le procédé de sécurisation est mis en œuvre à une fréquence inférieure à une fréquence de la modulation de largeur d'impulsion.

**11.** Procédé selon la revendication 7, caractérisé en que le procédé de sécurisation est mis en œuvre à une fréquence indépendante à une fréquence de la modulation de largeur d'impulsion.
